# EUROPEAN PATENT APPLICATION

(11) **EP 4 844 589 A1**
(43) Date of publication of application: **25.11.2026**
(21) Application number: 25305733.5
(22) Date of filing: 21.05.2025
(51) Int. Cl.: G06F 11/34, G06F 17/40

(54) **DATA LOGGING ENGINE**

(71) Applicant: Amadeus S.A.S., 06410 Biot (FR)
(72) Inventor: AMADIEU, Olivier, 06330 Roquefort Les Pins (FR); CAZORLA, Jean-Marie, 06650 Opio (FR); GRENOTTON, Aurelien, 06650 Le Rouret (FR); THUBE, Magali, 06480 La-Colle-sur-Loup (FR); TORRES, Alexandre, 06400 Cannes (FR)
(74) Representative: Samson & Partner Patentanwälte mbB

(57) **Abstract**

The present disclosure relates to automized logging of data. One or more data records for logging is received at the computing system. A computing system determines a logging priority of the one or more data records, a logging resource consumption for logging the one or more data records as well as available logging resources in relation to target logging resources. The computing system further determines, based on the priority, the logging resource consumption, and the available logging resources in relation to target logging resources one or more logging mechanisms for logging the one or more data records. In addition, the computing system logs the one or more data records according to the determined one or more logging mechanisms.

## Description

### FIELD

The present disclosure relates to information technology methods and systems, in particular, logging of data.

### BACKGROUND

Logging of computational data is performed for a variety of reasons, such as for technical, organizatorial as well as legal reasons. In many instances, logged data serve as a basis for a later reconstruction and rollback of past events and activities, such as technical faults, data transmission events etc. Logged data may also serve as basis, e.g. for the tracking of amounts of data generated during certain periods of time.

Attention is drawn to improving the operating mechanisms to execute automized resource efficient logging of data records at computing units.

### SUMMARY

According to a first aspect, a method for search result processing at a user terminal is provided, comprising: receiving one or more data records for logging and determining; a logging priority of the one or more data records; a logging resource consumption for logging the one or more data records; available logging resources in relation to target logging resources. The method further comprises: determining, based on the priority, the logging resource consumption, and the available logging resources in relation to target logging resources as well as determining one or more logging mechanisms for logging the one or more data records. In addition, the method comprises logging the one or more data records according to the determined one or more logging mechanisms.

According to a second aspect, a computing system for storing log files is provided, the computing system being arranged to execute the methods as described herein.

Finally, a computer program is presented that comprises instructions which, when the program is executed by a computer, cause the computer to carry out the methods described herein.

Further refinements are set forth by the dependent claims.

These and other objects, embodiments and advantages will become readily apparent to those skilled in the art from the following detailed description of the embodiments having reference to the attached figures, the invention not being limited to any particular embodiments.

### BRIEF DESCRIPTION OF THE FIGURES

Aspects and examples of the present disclosure are described with reference to the following figures, in which:
FIG. 1 illustrates a computing unit transmitting, receiving and logging data records as described herein.
FIG. 2 is a flow chart visualizing the present methodologies at a general level of abstraction.
FIG. 3 illustrates an example of an amount of data to be logged over a period of time using a methodology as described.
FIG. 4 depicts an example of logging of data records as described herein.
FIG. 5 depicts a further example logging of data records as described herein.
FIG. 6 illustrates a further example logging of data records as described herein.
FIG. 7 depicts the determination of a logging priority as described herein.
FIG. 8 shows an example of target logging resources as described herein.
FIG. 9 illustrates a further example of target logging resources as described herein.
FIG. 10 depicts logging mechanisms as described herein.
FIG. 11 shows the determination of available logging resources as described herein.
FIG. 12A illustrates a further example for the logging of data records as described herein.
FIG. 12B illustrates a further example for the logging of data records as described herein.
FIG. 13 shows the deletion of logged data records after a retention period as described herein.
FIG. 14 further illustrates the logging of data records as described herein.
FIG. 15 depicts an additional example for the logging of data records as described herein.
FIG. 16 depicts an internal structure of a computation engine which to host a computer unit.

### DETAILED DESCRIPTION

In view of the increased volume of data generated in transaction systems, more efficient mechanisms for logging data with respect to reducing computational costs as well as consumed storage resources are described hereinafter. The total amount of data generated, stored, logged and replicated globally is expected to increase from around 30 zettabytes in 2018 to around 200 zettabytes by 2025. This explosive growth of the data volume reflects the ever-expanding digital universe and its importance as well the increasing reliance on data across all sectors. Efficient storage and management of this massive data volume pose significant challenges. Organizations of any kind and size around the world develop robust strategies for data governance, security as well as storing, archiving and logging.

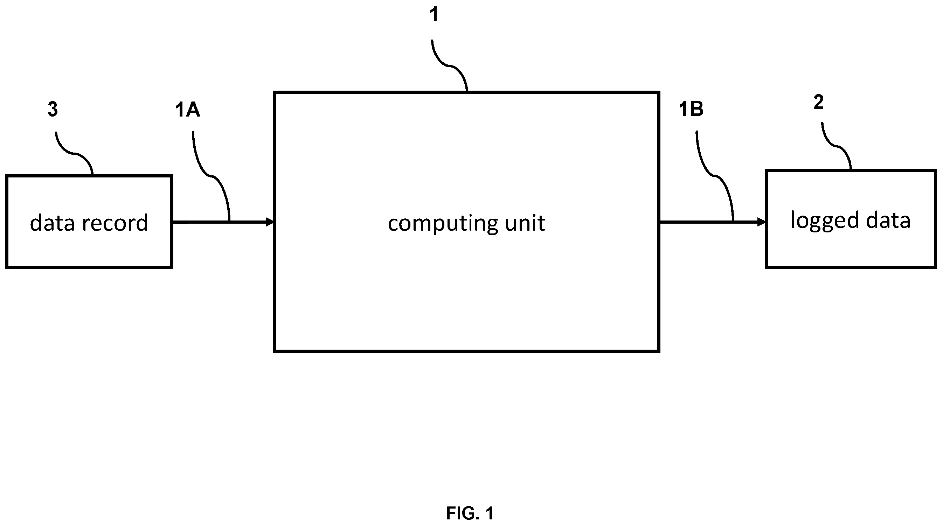

The present disclosure relates to methodologies for a logging functionality of data records 3 received at or transmitted from a computing system, comprising computing unit 1, e. g. over an interface 1A, as shown in FIG. 1.

Computing unit 1 is located anywhere and includes at least one individual computing machine that may be part of a computing cloud, as well as, in some embodiments, of a more powerful machine such as a database application server, a distributed database system comprising multiple interconnected machines, data centers etc. In some embodiments, computing unit 1 may act as a logging server towards one or more client, processing and serving logging requests form said one or more clients.

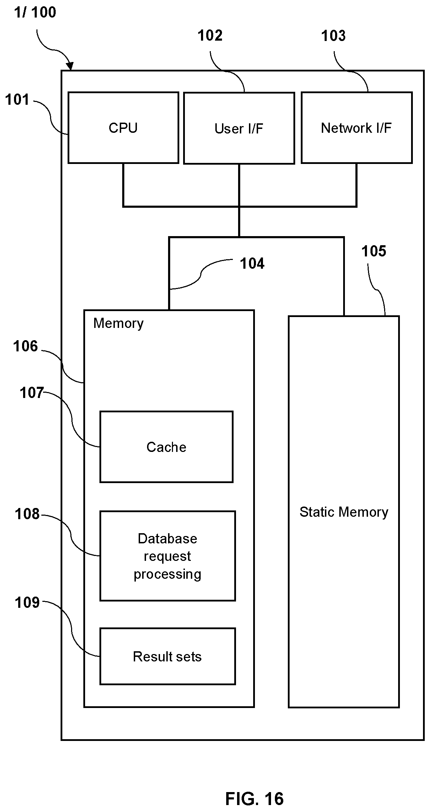

Computing unit 1 may be constituted of several hardware machines, such as personal computers as well as, in some embodiments, of more powerful machines such as database application servers, distributed database systems comprising multiple interconnected machines, data centers etc., depending on performance requirements. Computing unit 1 is embodied e.g. as stationary or mobile hardware machine comprising computing machine 100 as illustrated in FIG. 16 and/or as specialized system such as an embedded system arranged for a particular technical purpose, and/or as software component running on a general or specialized computing hardware machine (such as a web server and web clients).

Computing unit 1 receives data records, from e. g. (registered) clients or transaction servers having successfully performed or aborted a transaction, and/or transmits data records by communication interface 1A utilizing a wired or wireless Local Area Network (LAN) or a wireline or wireless Metropolitan Area Network (MAN) or a wire-line or wireless Wide Area Network (WAN) such as the Internet or a combination of the aforementioned network technologies and are implemented by any suitable communication and network protocols. In some embodiments, the data records may comprise data logs relating to abort procedures of a data transaction. In some embodiments, the communication interfaces 1A, 1B may encompass the communication means of computing unit 1, such as the communication sockets opened by computing unit 1.

In some embodiments, a data record may comprise any content that may be generated during a computerized process. Computerized processes may comprise any automated processes for controlling systems such as machines, sensors, actors or any other equipment used in e. g. manufacturing, transportation, vehicle control, science etc. Data records may be comprised of one or more data record fields, with said data record fields comprising data content of one or more data formats.

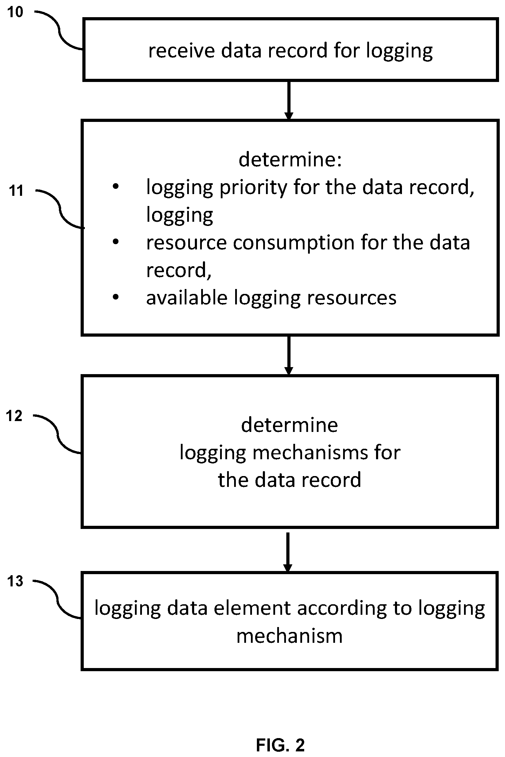

FIG. 2 shows a flow chart for smart logging of data records within the automated processing of data at e. g. computing unit 1 according to some embodiments. First, one or more data records for logging are received 10 e. g. by computing unit 1. In response to receiving 10, a logging priority of the one or more data records, the methodology of FIG. 2 determines 11, e. g. by the computing unit 1, a logging resource consumption for logging the one or more data records and available logging resources in relation to target logging resources. The methodology of FIG. 2 determines 12, e. g. by computing unit 1, based on the priority, the logging resource consumption, and the available logging resources in relation to target logging resources, one or more logging mechanisms for logging the one or more data records, . Finally, the one or more data records according to the determined one or more logging mechanisms are logged 13 e. g. by computing unit 1.

In some embodiments, the data records may be logged on storage devices comprised by computation unit 1 and/or storage devices being comprised by other components of the computing system.

This methodology as shown in FIG. 2 and as described herein provides a data logging methodology that, based on the data record(s) to be logged, makes an efficient use of limited available computing resources, such as processor, energy and data storage resources. Said logging resources are limited by boundary conditions, such as a maximum storage space to be available per month. Based on the currently and future available logging resources as well as the intended future use (functionality) of the date record(s) to be logged, the methodology provides optimized logging mechanisms taken from a spectrum of defined logging mechanisms. The logging priority defines, as described in detail below, a logging rank of the data record(s) which also forms a basis for the determination of the logging mechanisms. The logging of the data records is then executed by e. g. approximately exhausting, but not exceeding the monthly available maximum storage space by steering/controlling the amount of data to be logged. The methodology as provided also enables a flexible controllability of the logging functionality, as a target and an upper logging limit (target resources) can be set and potentially less relevant data are to be excluded from logging, therefore using available resources effectively.

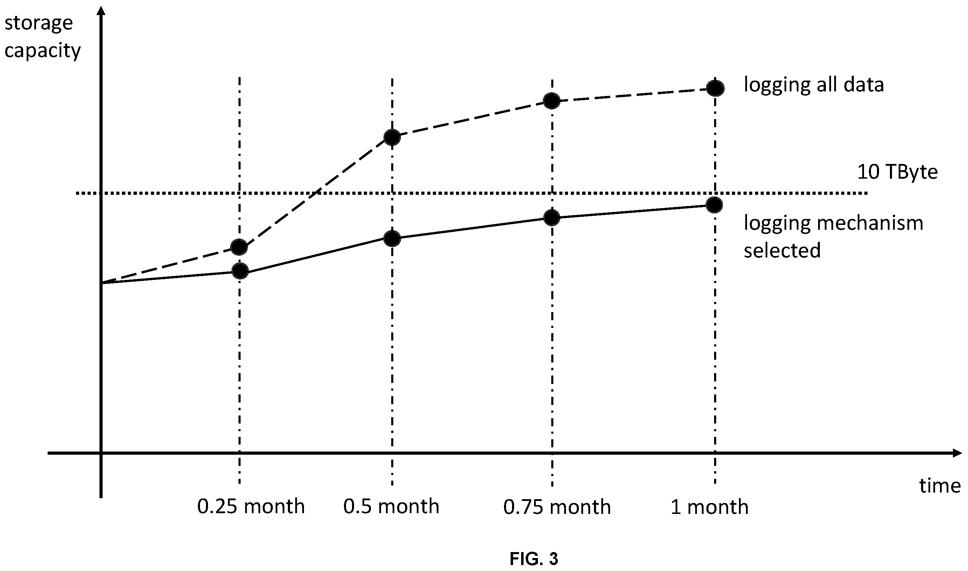

An example showing effects of the present methodologies is illustrated in FIG. 3 wich depicts the results of a logging activity over the period of one month. The available or target storage resources are set to be 10 TByte. The upper dashed curved shows the storage capacity consumed when all data would be logged, i. e. in the case of a data logging mechanism which logs all occurring data. However, uncontrolled logging all occurring data would, over the time, exceed the available storage resources of 10 TByte. As shown in FIG. 3, this would happen at a point in time between 0.25 and 0.5 month, where the amount of data logged may increase e. g. from 8 TByte to 12 TByte, therefore exceeding the threshold of the available or target storage resources as set by 10 TByte.

Applying, however, a logging mechanism according to the methodology as shown in FIG. 2 is able to keep the consumed logging space under the target value of 10 TByte over the whole period of one month. In the example of FIG. 3, the amount of logged data then may increase between 0.25 and 0.5 months only from e. g. 8 TByte to 9 TByte, remaining well under the threshold of 10 TByte. As further shown in FIG. 3, the logging mechanisms as determined by the methodology shown in FIG. 2 ensure that the amount of logged data always remains under the threshold of 10 TByte for the whole duration of one month, whereas with the mechanism logging all data a return to an amount of logged data below the threshold of 10 TByte is no more possible within the duration of one month. The example as shown in FIG. 3 illustrates that the logging mechanism in accordance with the methodology enables the steering of the amount of data to be logged in order to effectively use available data storage resources, such as the 10 TByte as shown in FIG. 3, as well as to remain within the limits and thresholds (10 TByte) as given by available storage resources. In addition, the methodologies enable the saving of storage resources.

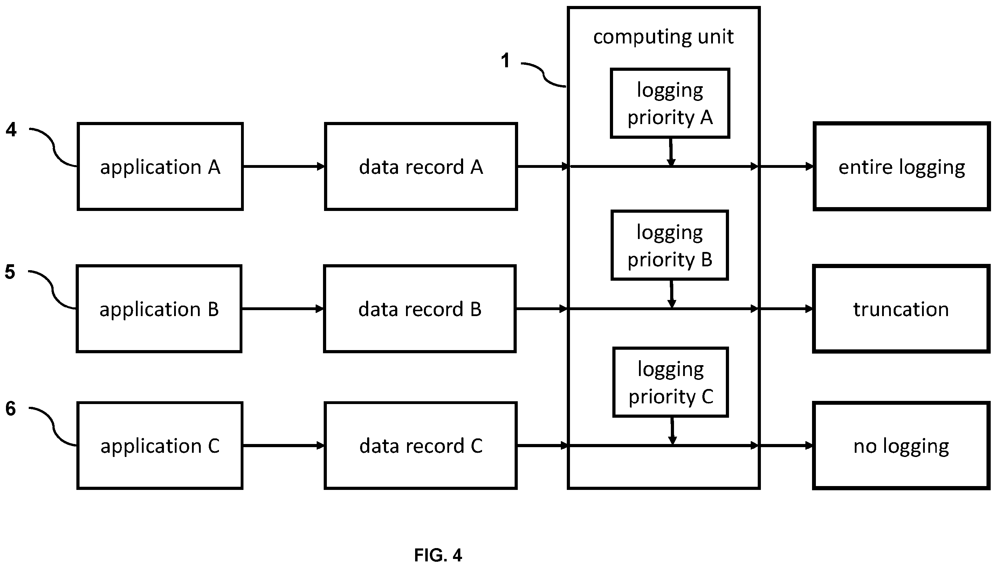

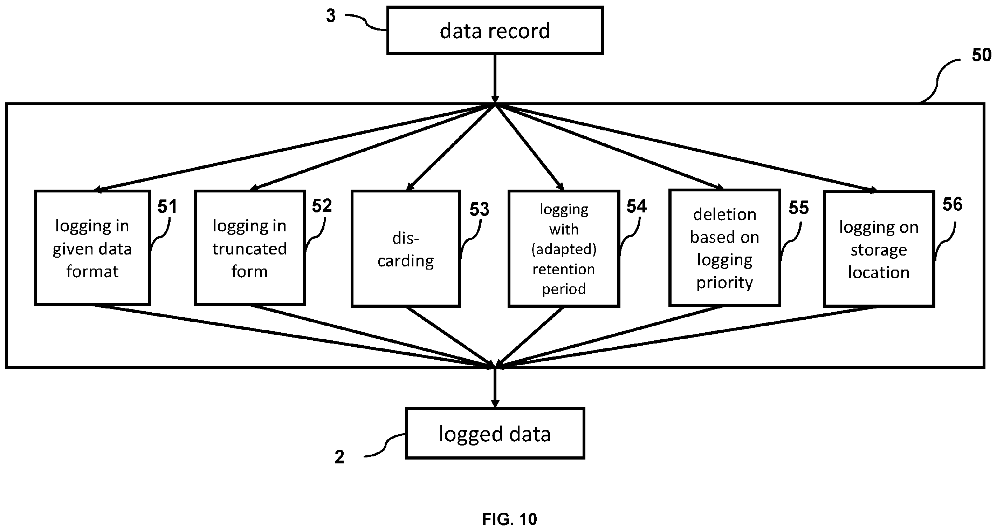

FIG. 4 illustrates in more detail the logging of different data records A, B, and C according to different determined logging mechanisms. In some embodiments and as shown and described in more detail with reference to FIG. 10, the logging mechanisms may comprise logging the data records A, B, and C in a given data format and/or logging said data records in a truncated form, and/or discarding at least one of said data records A, B, and C, i.e., preventing it from being logged. In some embodiments, the logging mechanisms may comprise logging said data records with a data retention period after which said data records are to be purged and/or deleting previously logged data records before their retention period has expired, based on the logging priority of the previously logged data records. Further, the determined logging mechanisms may comprise logging said data records at different storage locations.

As shown in FIG. 4, data records A, B, and C have been previously generated by applications A, B, and C, respectively, before being received 10 by computing unit 1, which determines 11 respective logging priorities A, B and C and applies, based on the determined logging priorities, a logging mechanism for each one of the data records A, B and C. The logging mechanism as determined for data record A logs the entire data record, whereas the logging mechanism B as determined for data record B logs a truncated version of data record B. Finally, the determined logging mechanism for data record C does not perform any logging of said data record.

Applications A, B, and C may comprise, in some embodiments, read- and write-access of a database, such as an SQL-database, with the data records A, B and C comprising the log content for the whole corresponding database transactions. In the case of a write-access, which may be comprised by application A, the logging priority determined for the corresponding data record A may be higher as for e. g. data record B, generated a read-only-access as comprised by e. g. application B, since a write-access to a database may, under some circumstances, leave inconsistent data in the database. Therefore, for a complete and integer later reconstruction of the consistent original data, it may be necessary to assess the whole data logged for said database transaction. Therefore, the determined logging mechanism for data record A logs the complete content of said record. A simple read-access, however, generates no danger for data inconsistencies in the database. The corresponding log content of data record B therefore a lower logging priority and does not need to be logged in the case of e. g. limited storage resources.

Generally, the data record 3 can relate to any content or data to be logged. In embodiments, the data records comprise transaction data records, and/or database queries as well as web requests and/or data exchange data according to any request-response protocols, typically at the application layer. In some embodiments, the data record 3 may be a data record to be transmitted between two network nodes, such as a database and a requesting server which may be comprised by computing unit 1, with the data record 3 comprising data retrieved in response to a request sent by the server to the database.

In some embodiments, the data record 3 may comprise data relating to a current operational state of an equipment and/or machine, such as a remote production unit or a vehicle, with the data record being sent to a central server, which may be comprised by the computing unit 1, for further processing and logging. In some embodiments, the data record 3 may comprise control data sent by the central server/computing unit 1 to the e. g. remote production unit or vehicle.

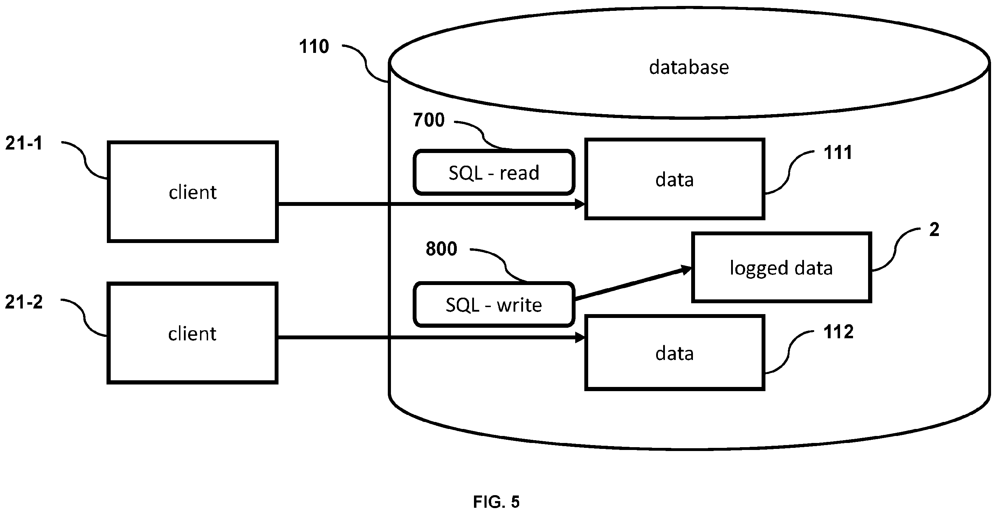

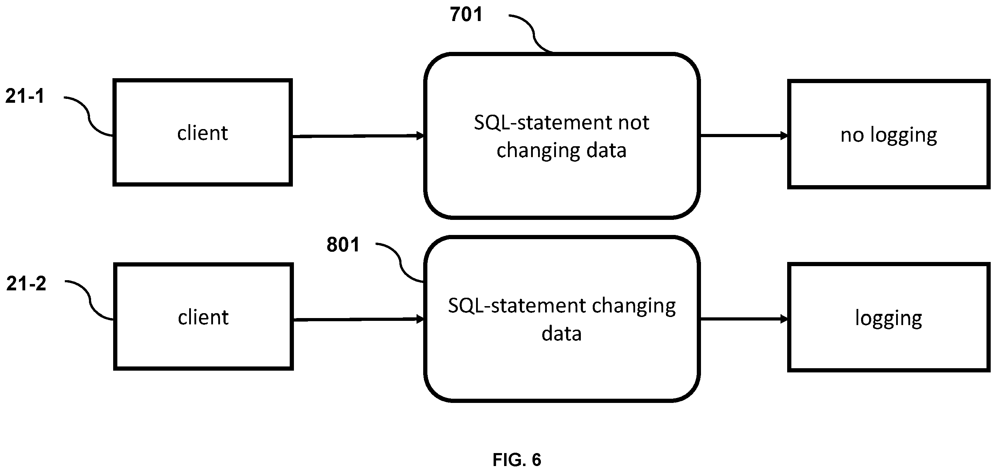

In some embodiments, and as shown in FIG. 5 as an example, data records 3 may comprise SQL-read statements 700 and SQL-write-statements 800, being sent by clients 21-1, 21-2 to database 110 for accessing data 111, 112 being stored at the database 110. As shown in FIG. 5, the SQL-statements 700, 800 sent by clients 21-1, 21-2 may be logged and added to the logged data 2. The logging of the SQL-statements 700, 800 is based on a logging priority. As indicated by FIG. 6, SQL-statements 701, which do not cause any changes to accessed data 111 or 112 will not be logged, meaning that these statements do not get associated with a logging priority (other than zero). On the other hand, SQL-statements 801 which cause a modification of the accessed data 111, 112, may be logged and are therefore associated with a logging priority (which usually is higher than zero). Logging only SQL-requests causing modifications and changes to accessed stored data 111, 112 may on one hand enable any later tracking of database inconsistencies that may occur during modifications of the data 111, 112 and also may enable any later rollback of data modifications for reestablishing a consistent data state in database 110. On the other hand, logging only SQL-requests causing modifications and changes to accessed stored data 111, 112 enable an efficient usage of available storage space by logging only those requests, which may cause a danger of leaving database inconsistencies at all, since all other SQL-requests leaving the stored data 111, 112 unchanged, such as SQL-read requests 700, do not generate any threat to the data consistency of the data 111, 112 at all and are therefore not needed for any later tracking and rollback activities and consequently do not need to be logged either. The example as described may, in embodiments, also be applicable to any other type of read- and write statements and/or any othe type of requests.

Said embodiments may be applicable e.g. any database transactions, credit card transactions or any other data transactions etc.

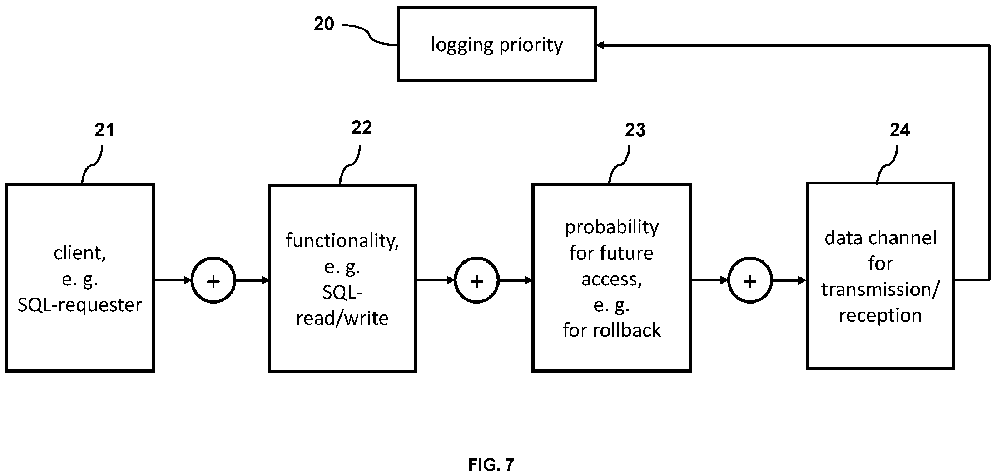

In some embodiments and as shown in FIG. 7, determining the logging priority 20 is based on one or more of: a client 21 associated with the one or more data records, such as e. g. clients 21-1, 21-2 sending SQL-requests to database 110; a functionality 22, such as a content or an intended use of the one or more data records (e. g. SQL-read/write requests 700, 800); a probability 23 of a future access to the one or more data records (e. g. for rollback of database transactions); a data channel 24 for transmission/reception of the one or more data records (e. g. channel using TCP/IP protocol). This enables a flexible determination of the logging priority 20 being adapted to the individual structure, format and use of the data record 3 and its individual conditions under which the data record 3 has been received. In embodiments, the clients 21, 21-1, 21-2 on which the logging priority 20 may be based may comprise a client requesting a credit card transaction, resulting in a corresponding high logging priority 20 for the requests, since a later tracking of credit card transactions may be of high importance in the case of possible inconsistencies of the financial data transactions.

In embodiments and as also indicated by FIG. 7, the logging priority may be calculated based on the following formula (formula 1): ${P}_{log} = {P}_{log}^{Client} + {P}_{log}^{func} + {P}_{log}^{fut . access} + {P}_{log}^{data channel}$ With ${P}_{log}^{Client}$ as the logging priority based on the client 21 associated with the one or more data records, such as the clients 21-1, 21-2 associated with e.g. SQL-requests to database 110, ${P}_{log}^{func}$ as the logging priority based on the functionality/content/intended use 22, such as the SQL-read or write-request 700, 800, ${P}_{log}^{fut . access}$ as the priority based on the probability for future access of the one or more data records, e. g. for rollback and ${P}_{log}^{data channel}$ as the logging priority based on the data channel 24 for transmission/reception (e. g. TCP/IP) of the one or more data records. Calculation of the logging priority according to the aforementioned formula enables a flexible integration of all boundary conditions, such as the boundary conditions shown in FIG. 7 influencing the logging priority. The aforementioned formula further enables the integration of additional boundary conditions not shown in FIG. 7, e. g by including more corresponding summands into said formula. The formula for calculating the overall logging priority as shown above may be generalized in order to comprise further logging priorities, such as a logging priority based on the provider of the data.

Client 21, 21-1, 21-2 associated with the data record 3 may comprise the client from which computing unit 3 and/or database 110 has received data record 3. In embodiments client 21 may comprise a client device that has generated data record 3 but is different from the client device, e. g. client device 21-1, 21-2 computing unit 3 and/or database 110 has received data record 3. Client 21, 21-1, 21-2 may be connected to computing unit 3 and/or database 110 via any network, such as e.g. the Internet. Client 21, 21-1, 21-2 may be located anywhere and is comprised of at least one individual computing machine such as a personal computer, a mobile station such as a laptop or tablet computer, a smartphone, and the like, as well as, in some embodiments, of a more powerful machine such as a database application server, a distributed database system comprising multiple interconnected machines, data centers etc. In some embodiments, client 21, 21-1, 21-2 may act as a server (e.g. a transaction server) towards one or more other clients, processing and serving requests from said one or more other clients.

In some embodiments, the functionality and/or content 22 of data record 3 may relate to a data transmission between data centers connected by a network, with each data center comprising e.g. computing unit 1 and the other data center comprising e.g. client 21. The network may comprise of millions of said data centers, such as data bases distributed worldwide and also comprise of millions of possible paths connecting these data centers/data bases. The network may utilize a wired or wireless Local Area Network (LAN) or a wireline or wireless Metropolitan Area Network (MAN) or a wireline or wireless Wide Area Network (WAN) such as the Internet or a combination of the aforementioned network technologies and are implemented by any suitable communication and network protocols.

In some embodiments, the functionality and/or content 22 of data record 3 may relate to measurement data obtained e. g. by a sensor unit comprised e. g. by client 21. The measurement data may be e. g. obtained by one or more sensor units of one or more vehicles being part of a vehicle fleet and may indicate e.g. the start point, the destination point of a distance as driven by a vehicle, the data of the vehicle ride, a vehicle registration number, corresponding GPS data and fuel consumption and the velocities driven on said distances. The priority for data records 3 to be logged may be based e. g. on the start and the destination point as well as the date of the vehicle ride and the vehicle registration number, leading e. g. to the determination 12 of a high logging priority for only those data records 3 relating to the start and the destination point as well as the date of the vehicle ride and the vehicle registration number. Logging only said data records may e. g. enable the operator of the vehicle fleet, such as a logistics provider, to store only the data relevant for tracking the deployment of its vehicles.

In some embodiments, the functionality and/or content 22 of data record 3 may relate to context data, relating e. g. to the transmission of the data record 3, and/or code data and/or payload data.

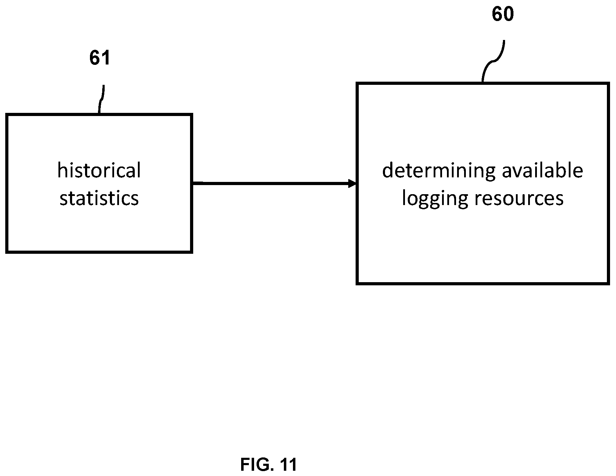

In some embodiments, the probability 23 for future access of data record 3 may comprise a time-dependent probability that the generating client and/or sender and/or the recipient of data record 3 may access data record 3 for a later assessment, such as for statistical purposes, for a database rollback etc. In embodiments, the time-dependent probability may be calculated using the following formula (formula 2): 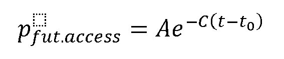 The corresponding logging priority ${P}_{log}^{fut . access}$ being based on the probability for future access of the one or more data records may then be defined as (formula 3): 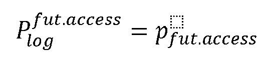 with t₀ as the point in time where the one or more data records have been generated or received and the corresponding logging priority has been determined (see also FIG. 2), t as an assumed point in time in which the logged data may be potentially accessed, A as the access probability at the logging time t₀ and C as a data dependent factor indicating a decay rate of the probability that a data record may be accessed for later assessment in the future. A and C may be determined based on statistical data, such as historical statistics 61 as shown in FIG. 11, which themselves are based on earlier request and their corresponding responses as well as the corresponding logged data records.

In some embodiments, the data channel 24 for transmission and/or reception of the one or more data records may comprise a transmission channel employing protocols from the TCI/IP protocol stack. In some embodiments, the data transmission/reception channel 24 may comprise analog and/or digital data transmission over point-to-point or point-to-multipoint communication channels based on e. g. copper wires, optical fibers and/or wireless communication using e. g. transmission frequencies of the electromagnetic spectrum, such as radio and/or infrared and/or optical frequencies.

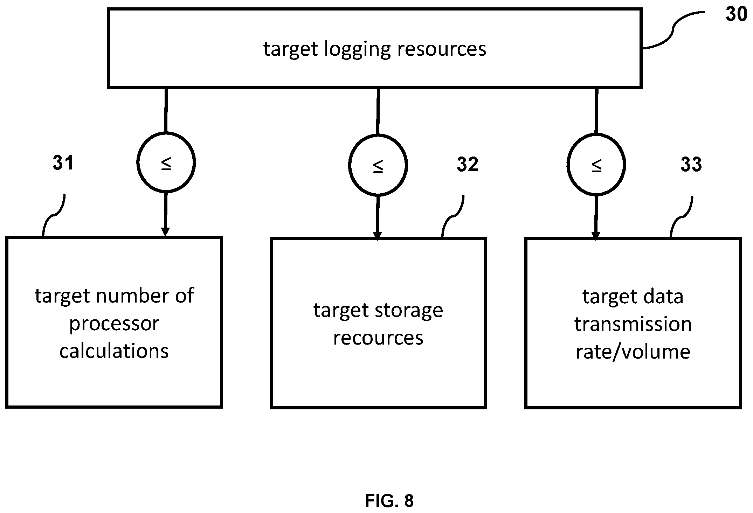

In some embodiments and as shown in FIG. 8, the target (or available) logging resources 30 comprise at least one of: a target number of processor calculations 31; target storage resources 32; and/or a target data transmission rate and/or data transmission volume 33 over a network. The target number of processor calculations 31, the target storage resources 32 and the target data transmission rate/volume 33 may form limits for logging resources that may be either previously defined and which are allowed or sought to be reached within a longer time period in order to be able to log sufficient data, but which should on the other hand should not be exceeded, as also indicated in FIG. 8 (at least on average in the long term, see also FIG. 3 illustrating a case using the target storage resources 32).

In embodiments, the target number of processor calculations may comprise the number of processor calculations needed to receive, process, store, and delete the data to be logged. In some embodiments, the processor calculations may comprise the calculations of the one or more processors of the storage device employed for logging the data, such as the computing unit 1 of FIG. 1. In some embodiments, the target storage resources 32 may comprise a storage volume allocated to client 21, with the storage volume comprised by one or more storage disks of e. g. computing unit 1 or another one or more mainframe computing units. In some embodiments, target storage resources may be part of a storage cloud system providing corresponding services to a client, such as client 21. In some embodiments, the target transmission data rate/volume 33 may comprise transmission rates/volumes provided to client 21 for receiving and transmitting data at computing unit 1. In some embodiments, the target transmission data rate/volume 33 may comprise one or more target transmission data rates/volumes for one or more data channels 24 as described herein.

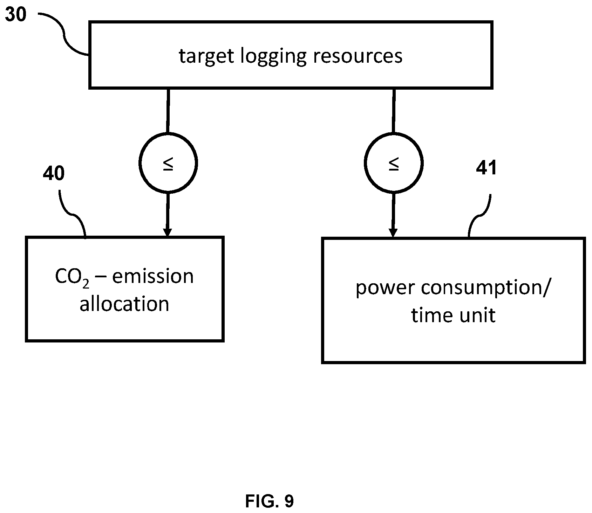

In some embodiments and as illustrated in FIG. 9, the target logging resources 32 are determined based on at least one of a given CO₂-emission allocation 40 and power consumption 41 per time unit. As also illustrated in FIG. 9, the CO₂-emission allocation 40 as well as the power consumption 41 per time unit may form limits for logging resources that may be either previously defined and which are allowed to be reached within a longer time period in order to be able to log sufficient data, but which should on the other hand should not be exceeded, as it has already indicated in FIG. 8 for the corresponding targets being described with reference to FIG. 8.

Controlling the amount of data to be stored, such as logging data leads to an optimized usage of available storage resources therefore makes a contribution for reducing the carbon budget. In some embodiments, the CO₂-emission allocation 40 may comprise corresponding allocations based on processor calculations of e. g. computing unit 1 for receiving, processing, storing, transmitting and deleting the data to be logged according to the logging mechanisms as determined by the methodologies as described herein. In some embodiments, the power consumption per time unit may comprise a power consumption per a defined time period. The negotiated agreement may be based on e. g. the limitations of the technical capacities of the computing system 1, the client device 21 or the transmission system and may comprise e. g. the maximum possible numbers of processor calculations per second or the maximum amount of data that is possible to be transmitted e. g. in a second. In some embodiments, the time unit may comprise an allocated time period of the duration of one month, as shown in FIG. 3. In other embodiments, the allocated time period may comprise a year, or a day, or an hour or any other defined time period. The power consumption may comprise the power consumption of the computing unit 1 and/or any additional computing devices the computing unit 1 may utilize for processing and storing the data to be logged.

In some embodiments and as shown in FIG. 10, the one or more logging mechanisms 50 may comprise the logging 51 the one or more data records 3 in a given data format; logging the one or more data records 3 in a truncated form 52; discarding 53 at least one of the one or more data records 3 from being logged; logging 54 the one or more data records 3 with a data retention period after which the one or more data records 3 are to be purged; deleting 55 one or more previously logged data records 3 before their retention period has expired, based on the logging priority of the previously logged data records; logging 56 the one or more data records 3 at one or more storage locations 74. These mechanisms provide adapted logging mechanisms 50 for an optimization of the storage amount to be consumed by the loggeddata 2, depending on the data records 3 themselves and the boundary conditions under which said data records 3 are logged.

In some embodiments, determined logging mechanisms 50 may optimize the storage space to be consumed by logging the data after the data records have been converted into a given data format. The data formats to be converted from or to be converted into may comprise a JavaScript Object Notation (JSON) format and/or one or more JSON-related formats such as GeoJSON (format designed for representing simple geographical features), JSON-LD (JavaScript Object Notation for Linked Data), JSON-RPC (JavaScript Object Notation Remote Procedure Call), JSON-Feed, Hypertext Application Language (HAL). Data formats may also comprise YAML (Yet Another Markup Language), CSON (CoffeeScript-Object-Notation), HOCON (Human-Optimized Config Object Notation), JSON5, Hjson (user interface for JSON), Jsonnet (configuration language for app and tool developers), Dhall programmable configuration language, CUE (Configure Unify Execute), JSON streaming comprising Line-delimited JSON (LDJSON), Newline-delimited JSON (NDJSON) und JSON lines (JSONL). Also, data formats may comprise INI (Initialization/Configuration Files) and TOML (Tom's Obvious, Minimal Language). In some embodiments, the data format of the data to be logged may comprise an XML (eXtendible Markup Language) format and/or one or more XML-related format such as RSS (Rich Site Summary), Atom, Office Open XML, OpenDocument, SVG (Scalable Vector Graphics), COLLADA (COLLAborative Design Activity), and XHTML (Extensible Hypertext Markup Language).

In some embodiments, the determined logging mechanisms 50 may then convert a data record to be logged from a JSON- or XML-based format to a PROTOBUF- or EDIFACT-based format respectively, before logging. In some embodiments, the determined logging mechanisms 50 may compress the data record to a compressed data format, such as a ZIP-based format, before logging said compressed data record. In some embodiments, any other given data format is comprised into which the data records to be logged may be converted into.

In some embodiments, the determined logging mechanisms 50 may truncate the data to be logged by 30%, 50% or 80% before storing the data record 3. In embodiments, the truncating of corresponding data records 3 may be executed by client-specific templates optimized for client-employed applications. Said truncation may be based on criticality of the logging content, by e. g. flagging and/or tagging, e. g. by computing unit 1, parts of content of the log file to be truncated by criticality. The criticality of the logging content may be determined based on the content of the data records 3. As an example, all content of a data record comprising SQL-write-request 800, meaning that assessed data 111, 112 of e. g. database 110 has been modified, is associated with a criticality score of "HIGH" by e. g. computing unit 1, as it may be necessary at a later point in time to track SQL-write-requests 800 for tackling database inconsistencies, e. g. by performing a rollback. Therefore, the whole content of a SQL-write-request 800 has to be logged. On the other hand, regarding e. g. an SQL-read-request 700, which does not modify any data 111, 112 stored at database 110, not all content of said SQL-request needs to be logged and therefore does not need to be associated with a criticality score of "HIGH". Further elaboration this example, only those content indicating the read-functionality itself needs to be logged, whereas the remaining content indicating which data 111, 112 stored at database 110 has been read may be skipped and therefore is associated with a criticality score of "LOW".

Computing unit 1 may skip non-flagged/non-tagged logging content from being stored, as said content has been determined as being less critical or important. In embodiments, the determined logging mechanisms may filter the data to be logged based on the criticality of the content. In some embodiments, the determined logging mechanisms may refrain from filtering out logging content comprising a criticality score of "HIGH", or comprising a criticality score of HIGH" or "MEDIUM". In some embodiments, the determined logging mechanisms 50 may refrain from filtering out logging content comprising a criticality score of "HIGH", MEDIUM" as well as "LOW". In some embodiments, the filter employed by the logging mechanisms 50 may use additional or different criteria for filtering out data records from logging.

In some embodiments, criticality scores may be defined for different clients 21, or client types, or applications or transmission channels.

In some embodiments, the determined logging mechanisms 50 may comprise a random discarding of the data records to be logged. The amount of data records to be discarded may be determined e. g. on the criticality score of the data records. In some embodiments, the determined logging mechanisms 50 may randomly discard e. g. 30% or 50% or 70% of all data records having a criticality score of "LOW". In some embodiments, the logging mechanisms 50 may randomly discard e. g. 30% or 50% or 70% of all data records to be logged.

In some embodiments, the determined logging mechanisms 50 may log 54 the data records with a retention period of e. g. one year or one month. In embodiments, a standard retention period, such as a period of one year, for all data records to be logged may be defined or an individual retention period may be defined for each data record based on e. g. the functional type of the data record or the data format of the data record.

In some embodiments, the determined logging mechanisms 50 may adapt (revise) by e.g. shorten the retention period for previously logged data records with a criticality score of "LOW" by an amount of 30% or 50% or 70% of the retention period of e. g. one year, for which said data records will be logged when sufficient storage capacities are available. In some embodiments, when storage capabilities are almost no more available, the retention period may be shortened for a part of the logged data records, such as the logged records having a criticality score of "HIGH", "MEDUIM" or "LOW". In some embodiments, the retention period may be shorted by an amount of 30% for data record having a criticality score of "HIGH" and/or the retention period may be shorted by an amount of 50% for data record having a criticality score of "MEDIUM" and/ or retention period may be shorted by an amount of 70% for data record having a criticality score of "LOW".

In some embodiments, the determined logging mechanisms 50 may log the data record to one or more other storage locations 56 comprised and/or connected to computing unit 1. In some embodiments, the logging mechanisms 50 may log the data records to additional one or more storage locations when the storage capacity or the available or target logging resources 30 of the storage location as comprised by computing unit 1 has been exhausted or is about to be exhausted. In embodiments, the one or more storage locations are connected by each other and with the computing unit 1 by a network. In embodiments, the computing unit 1 and the one or more storage locations form part of a computing cloud. In some embodiments, the logging mechanism may balance the logging of the data records between the one or more storage locations in order to avoid storage capacity shortages or exhaustions at one of the one or more storage locations.

In some embodiments and as shown in FIG. 11, determining available logging resources 60 in relation to target logging resources comprises predicting, based on historical statistics 61 relating to previously logged data records, a future amount of data records likely to be logged in a given time period. This enables to optimize future logging activities in order to log on the available storage resources the maximum possible amount of data records.

In some embodiments, the historical statistics 61 may comprise the data records logged on each on the one or more storage location over a period of time, such as the retention period. In embodiments, the determining of the available logging resources may be executed by employing Artificial Intelligence (AI) and/or machine learning methods, such as neural networks, which may be based on the historical statistics 61. As an example, an AI method may identify all historical SQL-requests 800 modifying the data 111, 112 stored at database 110 as relevant for determining the available logging resources, as only data modifying SQL-request change the usage rate of the storage resources of e. g. database 110. SQL-requests not changing any data 111, 112 stored at database 110, such as SQL-read-requests 700, may be, on the other hand, be considered as not relevant by the AI-method for determining the available logging resources. Furthermore, the AI methods may include additional historical data reception and deletion requests received at database 110 e. g. from data channels 24 employing e. g. a TCP/IP protocol or a File Transfer (FTP) Protocol. In some embodiments, the historical statistics may comprise historical statistics relating to previously logged data records for each one of the one or more storage locations.

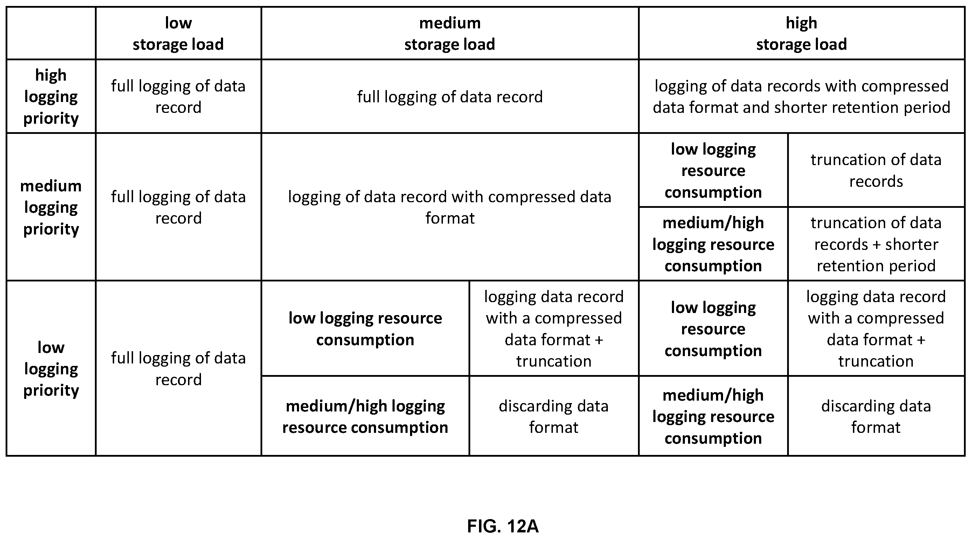

FIG. 12A shows the logging 70 if data records based on the logging resource consumption of the data records to be logged for low, medium and high storage load, e. g. already consumed storage resources in relation to the target storage resources e.g. at computing unit 1, as well as for the logging resource consumption of the data records to be logged. In embodiments, the storage load may be determined before the logging priorities, since in the case of a low storage load, the data records may be fully logged regardless of their logging resource consumption, as abundant free storage space is available anyhow. In embodiments, the classification of the storage load as low, medium and high may be based on fixed ratios of the already consumed storage resources in relation to the target storage resources. As an example, a corresponding ratio of smaller than 0.7 may be classified as "LOW", a ratio between 0.7 and 0.9 may be classified as "MEDIUM" and a ratio of greater than 0.9 may be classified as "HIGH". In embodiments, the storage load may be classified based on prediction of future amounts of data to be logged (traffic/volume projection), with the predictions themselves being based on historical data, such as historical statistics 61.

The logging priorities for the data records to be logged may also be determined as "HIGH", "MEDIUM" and "LOW" as shown in FIG. 7, using the formulas 1, 2, and 3. FIG. 12A shows that in the case of a logging priority of "HIGH", the data records are logged independently of their logging resource consumption. For a low and medium storage load occurring e. g. at computing unit 1, the data records are fully logged, whereas in the case of a high storage load, the data records are logged in compressed data format and a shorter retention period, e. g. only one month than one year.

For a logging priority of "MEDIUM", for the low and medium storage load, the selected logging mechanisms comprise the full logging of the data record and the logging with a compressed data format, respectively, without taking into account the logging resource consumption of the data recordes to be logged. For a high storage load, however, the logging resource consumption of the data records to be logged is taken into account. For a low logging resource consumption, the determined logging mechanism comprise the truncation of data records, and for a medium/high logging consumption, the determined logging mechanism comprise the truncation of data records together with the usage of a shorter retention period, e.g. one month than one year.

For a logging priority of "LOW", the data records are fully logged only when the storage load, e.g. at computing unit 1 is low. In the case of a medium and a high storage load, the logging resource consumption of the data records to be logged is again taken into account. As it can be derived from FIG. 12A, for a medium storage load, the determined logging mechanism comprise the truncation of data records and the truncation of data records together with the usage of a shorter retention period for a low and a medium/high logging resource consumption, respectively. In the case of a high storage load and a low logging resource consumption, the determined logging mechanism comprise the logging of the data record with a compressed data format together with the truncation of the data record. In the case of a high storage load and a medium/high logging resource consumption, the determined logging mechanism comprise discarding the data record altogether.

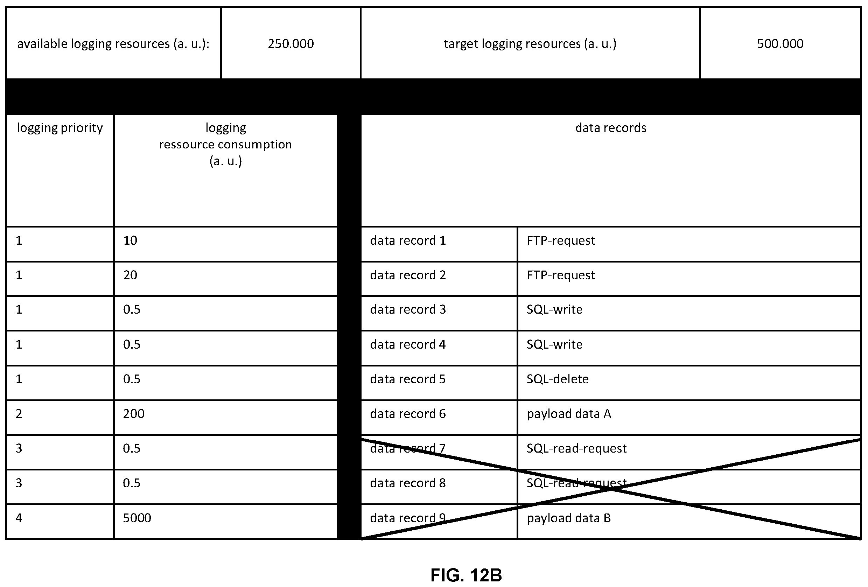

In some embodiments and as shown in FIG. 12B, the logging 70 of data records comprise, for the one or more data records, the logging 71 of the logging priority 20, the logging resource consumption 72, available logging resources in relation to target logging resources, the logging 72 of the determined one or more logging mechanisms 50. This ensures that with each logged data record, the logging history, such as the applied logging mechanisms and the technical boundary condition under which said logging has been performed, are recorded as well. This also enables a more detailed later tracking of the logging activities, which e.g. may enable a more efficient and precise remedy of data inconsistencies e. g. at database 110.

FIG. 12B illustrates data records comprising of a number of data records #1 to #9, stored e. g. at database 110. Data records #1 and #2 may comprise data relating to FTP-requests, e. g. for transmitting data to database 110. As further shown in FIG. 12B, data record #3 to #5 may comprise data relating to SQL-write or delete requests. Data record #6 may comprise payload data A, e. g. received by an FTP-request and modified by a SQL-write request. Data record fields #7 and #8 may comprise data relating to SQL-read (only)-requests and data record #9 to may comprise data relating to a payload B not modified by any SQL-request for a period of time so far. Further referring to FIG. 12B, the results of the determination 12 of the logging priority and the logging resource consumption by e. g. computing unit 1 is illustrated. Within the example as described, the logging priority may reflect a possible later use of the client/user for e. g. a later complete reconstruction of the whole data record. As obtained by FIG. 12B, the determined logging priority may be of numerical value 1, indicating the highest priority, for the data records #1 to #5, therefore ranking the data relating to the modification of the data 111, 112 stored at the database 110 and therefore also associating any modification or changes of the storage space consumption at database 110 with the highest priority to be logged. Data record #6 is ranked with a priority of numerical value 2 and corresponding data records #7, #8 and #9 are awarded with the lowest logging priority values of numerical values 3 and 4, respectively. This results in a differentiated logging scheme for the various requests causing a modification of the stored data 111, 112 and for leaving said data unchanged and also for data not being used for a period of time, such as payload data B. If, as it will be explained in more detail below, the available storage capacity is limited, logging e. g. only data records #1 to #6, e. g. in a plain text data format using logging mechanism 51, while discarding logging the other data records, e. g by using logging mechanism 53, may allow the assessment and reconstruction of the content of data record #3 at a later point in time, e. g. for the remediation of data inconsistencies at database 110 while simultaneously keeping the storage space needed to be consumed for logging as small as possible. This example further illustrates a resource efficient strategy for data logging. Further, data record #6 may be logged with a retention period of e. g. one year using logging mechanism 54.

With further reference to FIG. 12B, the determined logging resource consumption given in arbitrary units (a.u.) of the various data records #1 to #9 is illustrated. In embodiments, the logging resource consumption may be given in units referring to available storage space, available processor/processing power, available network transmission power, power consumption etc. Data records #1 to #5 consume only logging resources equal or less than 1 a.u. Data record #6, while carrying payload data A, consume significantly higher resources of 200 a.u. Data records #7, #8 and #9 consume the highest logging resources of 0.5 a.u. and 5000 a.u., respectively. As data records #6, #7, #8 and #9 are simultaneously awarded with lower logging priorities, the methodology as provided and shown in FIG. 2 enables either only temporarily logging or discarding the logging of data records consuming high logging resources while simultaneously being less important for a later tracking of the data modification activities at database 110.

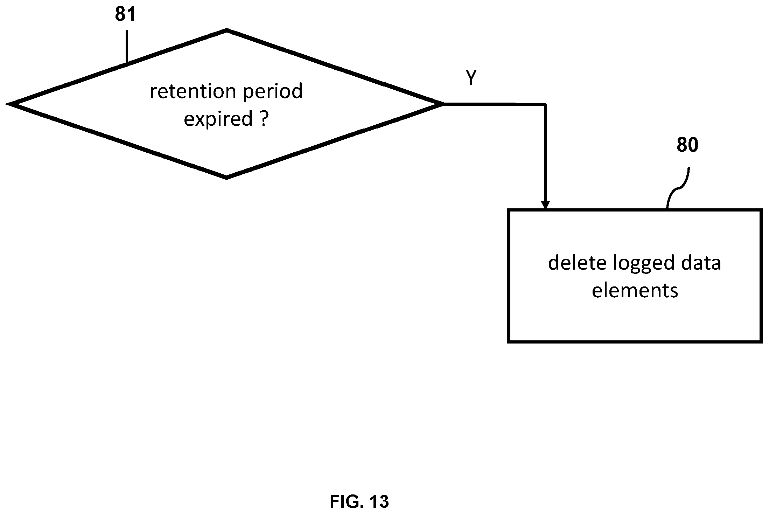

In some embodiments and as shown in FIG. 13, the logging of data records comprises, for the one or more data records, deleting 80 the one or more data records logged according to the determined logging mechanisms 50 in response to the data retention period being expired 81. This ensures that there are enough storage resources available, by timely deleting logged data records, whose e. g. validity has expired or which are not needed anymore. In some embodiments, the determined logging mechanisms 50 may delete or purge the logged data records after a period of e. g. one year. In some embodiments, purging or deleting the logged data records after expiring of the retention period may be executed in addition to other logging mechanisms, such as those as illustrated in FIG. 10 and described in the corresponding sections of this disclosure. To cite an example, the payload data A of FIG. 12B may be deleted after a retention period of one year, as already described.

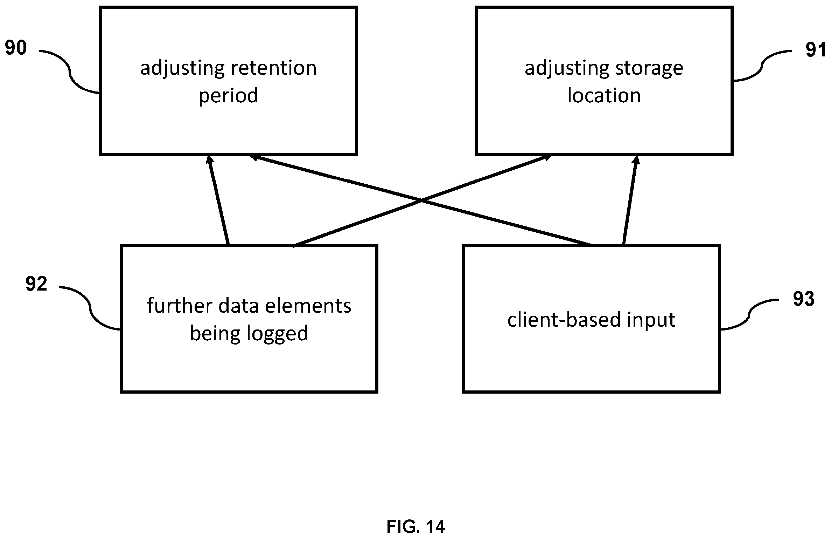

In some embodiments and as shown in FIG. 14, the logging of data records comprises adjusting 90, 91 the data retention period and/or the storage location after the one or more data records have been logged based on at least one of further data records being logged 92 and/or a client-based input 93. This further ensures the optimization of logging activities in order to log on the available storage resources the maximum possible amount of data records.

In some embodiments, the retention period may be shortened in response to a predicted increase of the amount of data records to be logged. The pretention period may be shortened e. g. from a period of one year to a period of one month or even one or several days. The prediction of future data records to be logged may be based on Artificial Intelligence- or machine learning-based methods using e. g. the historical logging statistics 61 for making the predictions. In embodiments, the client or client devices 21 may define a specific retention period for the data records that are determined to be logged and transmits a corresponding input to e. g. computing unit 1. In embodiments, the available storage resources may be increased either in response to a predicted increase of the amount of data records to be logged or in response to client or client-device 21 based input, e. g. when the client 21 itself expects future events that may result in more data to be logged within a period of e. g. the following six months. In embodiments, the retention period may be prolonged and/or the storage resources expanded in the case there are fewer data records predicted to be logged or the client or client-device 21 expects e. g. future data records which are of higher importance and therefore require a longer time for being logged.

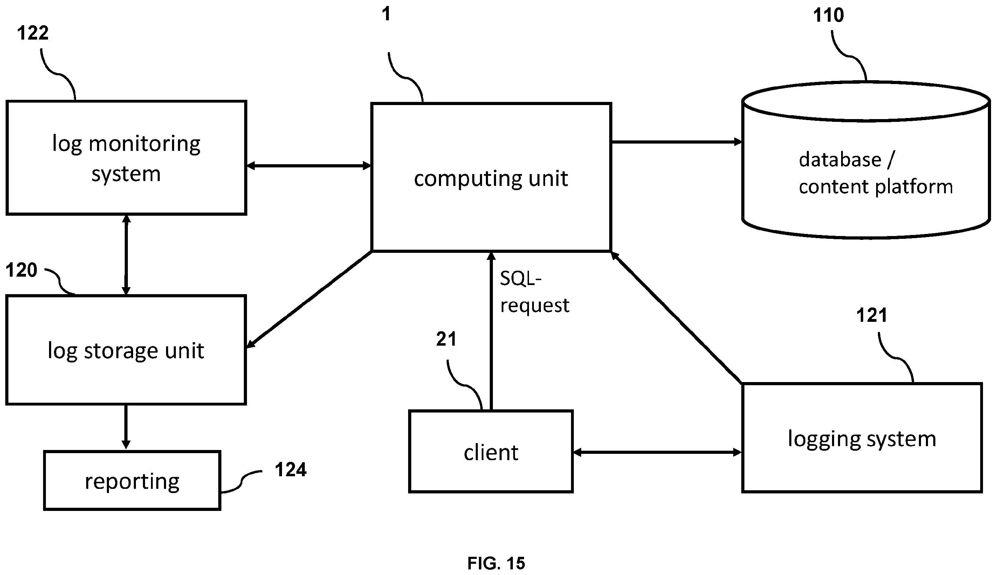

FIG. 15 illustrates a further example for a distributed computing architecture executing the methodologies as described herein. Computing unit 1 receives from client 21 a request (data record 3), e. g. an SQL-read- or SQL-write-request 700, 800 for database 110, which is to be logged at log storage unit 120. Computing unit 1 determines 11, in response to receiving the request 10, a logging priority of the request, a logging resource consumption for logging the request and available logging resources in relation to target logging resources. When determining 11 the aforementioned values and quantities, computing unit 1 may receive necessary data input from the client 21 itself, such as one or more values for logging priorities, but also from logging system 121, providing input on e. g. storage resource consumption and/or the processor power required for logging the request together with the corresponding CO₂-emission rates. In embodiments, client 21 may also obtain said quantities directly from logging system 121 and then further provides said quantities to computing platform 1. When determining said quantities, logging system 121 may get provided input from log monitoring system 122, which monitors, at the log storage unit 120 e. g. current parameters such as the current storage space consumption and/or the current computing power consumption. Logging system 121 may get provided said input either directly from log monitoring system 122 (not shown in FIG. 15) or via computing unit 1. In embodiments log storage unit 120 may perform a reporting 124 on its actual operating parameters, such a storage space consumption. Based on said input, computing unit 1 then determines 12, based on the priority, the logging resource consumption and the available logging resources in relation to target logging resources, as well as the logging mechanism for the request received from client 21.

FIG. 16 is a diagrammatic representation of the internal components of a computing machine 100 implementing the functionality of a computing system, such as computing platform 1. The computing machine 100 includes a set of instructions to cause the computing machine 100 to perform any of the methodologies discussed herein when executed by the computing machine 100. The computing machine 100 includes at least one processor 101, a main memory 106 and a network interface device 103 which communicate with each other via a bus 104. Optionally, the computing machine 100 may further include a static memory 105 and a disk-drive unit. A display, an alpha-numeric input device and a cursor control device may be provided as examples of user interface 102. The network interface device 103 connects the computing machine 100 implementing the user terminal 1 with the search platform 2.

Computing machine 100 includes a memory 106 such as main memory, random access memory (RAM) and/or any further volatile memory. The memory 106 may store temporary data and program data 107 to facilitate the functionality of the computing device 1, including program data to realize, by the computing unit 1, the receiving (activity 10) of one or more data records for logging. In addition, the memory 106 may store temporary data and program data 107 to realize, by the computing platform 1, in an activity 11 being in response to activity 10, the determination of a logging priority of the one or more data records; a logging resource consumption for logging the one or more data records and available logging resources in relation to target logging resources. Further, the memory 106 may store temporary data and program data 107 to realize, by the computing platform 1, in an activity 12 in response to activity 11, the determination, based on the priority, of the logging resource consumption, and the available logging resources in relation to target logging resources, and of one or more logging mechanisms for logging the one or more data records, as well as, in an activity 13, the logging of the one or more data records according to the determined one or more logging mechanisms.

A set of computer-executable instructions embodying any one, or all, of the methodologies described herein, resides completely, or at least partially, in or on a machine-readable storage medium, e.g., in the static memory 105 or, when loaded and being executed, in the main memory 106. For example, the instructions may include software processes implementing the search result processing functionality of the computing platform 1. The instructions may further be transmitted or received as a propagated signal via the Internet through the network interface device 103 or via the user interface 102. Communication within computing machine 100 is performed via a bus 104. Basic operation of the computing machine 100 is controlled by an operating system which is also located in the memory 106, the at least one processor 101 and/or the static memory 105.

In general, the routines executed to implement the embodiments, whether implemented as part of an operating system or a specific application, component, program, object, module or sequence of instructions, or even a subset thereof, may be referred to herein as "computer program code" or simply "program code". Program code typically comprises computer-readable instructions that are resident at various times in various memory and storage devices in a computer and that, when read and executed by one or more processors in a computer, cause that computer to perform the operations necessary to execute operations and/or records embodying the various aspects of the embodiments of the invention. Computer-readable program instructions for carrying out operations of the embodiments of the invention may be, for example, assembly language or either source code or object code written in any combination of one or more programming languages.

In certain alternative embodiments, the functions and/or acts specified in the flowcharts, sequence diagrams, and/or block diagrams may be re-ordered, processed serially, and/or processed concurrently. Moreover, any of the flowcharts, sequence diagrams, and/or block diagrams may include more or fewer blocks than those illustrated consistent with embodiments and examples.

The terminology used herein is for the purpose of describing particular embodiments and examples, and is not intended to be limiting. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details.

## Claims

1. A computer-implemented logging method, comprising:
• receiving one or more data records for logging;
• determining:
o a logging priority of the one or more data records;
o a logging resource consumption for logging the one or more data records;
o available logging resources in relation to target logging resources;
• determining, based on the logging priority, the logging resource consumption, and the available logging resources in relation to target logging resources, one or more logging mechanisms for logging the one or more data records;
• logging the one or more data records according to the determined one or more logging mechanisms.

2. The method of claim 1, wherein determining the logging priority is based on one or more of:
• a client associated with the one or more data records;
• a functionality of the one or more data records;
• a probability of a future access to the one or more data records;
• a data channel for transmission/reception of the one or more data records.

3. The method of claim 1 or 2, wherein the target logging resources comprise at least one of:
• a target number of processor calculations;
• target storage resources;
• a target data transmission rate and/or data transmission volume over a network.

4. The method of any one of claim 1 to 3, wherein target logging resources are determined based on at least one of a given CO₂-emission allocation and power consumption per time unit.

5. The method of any one of claim 1 to 4, wherein the one or more logging mechanisms comprise:
• logging the one or more data records in a given data format;
• logging the one or more data records in a truncated form;
• discarding at least one of the one or more data records from being logged;
• logging the one or more data record with a data retention period after which the one or more data records are to be purged;
• deleting one or more previously logged data records before their retention period has expired, based on the logging priority of the previously logged data records;
• logging the one or more data records at one or more storage locations.

6. The method of any one of claims 1 to 5, wherein determining available logging resources in relation to target logging resources comprises predicting, based on historical statistics relating to previously logged data records, a future amount of data records likely to be logged in a given time period.

7. The method of any one of claims 1 to 6, further comprising logging, for the one or more data records: the logging priority, the logging resource consumption, available logging resources in relation to target logging resources, the determined one or more logging mechanisms.

8. The method any one of claims 5 to 7, further comprising deleting the one or more data records logged according to the determined logging mechanism in response to the data retention period being expired.

9. The method of any one of claims 5 to 8, further comprising adjusting the data retention period and/or the storage location after the one or more data records have been logged based on at least one of:
• further data records being logged;
• a client-based input.

10. Computing system for storing log files, the system comprising:
• a computing unit configured to:
o receive one or more data records for logging;
o determine
▪ a logging priority of the one or more data records;
▪ a logging resource consumption for logging the one or more data records;
▪ available logging resources in relation to target logging resources;
o determine, based on the logging priority, the logging resource consumption, and the available logging resources in relation to target logging resources, one or more logging mechanisms for logging the one or more data records;
o log the one or more data records according to the determined one or more logging mechanisms.

11. Computing system according to claim 10, arranged to execute any one of the methods described in any one of claims 2 to 9.

12. Computer program product comprising a computer-readable medium storing program code which executes the method of any one of claims 1 to 10 when run by a computer.

13. Computer program implementing the method of any one of claims 1 to 10 when run by a computer.
